# EUROPÄISCHE PATENTSCHRIFT

(11) **EP 0 468 388 B1**
(45) Veröffentlichungstag und Bekanntmachung des Hinweises auf die Patenterteilung: **02.02.1994**
(21) Anmeldenummer: 91112201.8
(22) Anmeldetag: 20.07.1991
(51) Int. Cl.: B23B 3/06, B23B 13/02

(54) **Drehmaschine**
Lathe
Tour

(30) Priorität: 24.07.1990 DE 4023453
(43) Veröffentlichungstag der Anmeldung: 29.01.1992
(73) Patentinhaber: Gildemeister AG, D-33689 Bielefeld (DE)
(72) Erfinder: Schalles, Erhard, W-4800 Bielefeld 18 (DE)

(56) Entgegenhaltungen:
- EP-A- 0 226 836
- CH-A- 656 563
- DE-A- 3 041 171

## Beschreibung

Die Erfindung betrifft eine Drehmaschine nach dem Oberbegriff des 1. Anspruchs.

Eine Drehmaschine ist aus DE-A 30 41 171 bekannt und dient dazu, lange, schlanke Werkstücke, die unter dem Schnittdruck zum Durchbiegen neigen, zu bearbeiten. Dazu ist auf dem Längsschlitten eine Führungsbuchse vorgesehen, die das Werkstück während der Bearbeitung mit auf Querschlitten des Längsschlittens angeordneten Werkzeugen in der Nähe ihres Angriffspunktes abstützt. Die Führungsbuchse umfaßt das Werkstück dabei an seinem unbearbeiteten Bereich. Eine Rückzugbewegung des Längsschlittens während der Bearbeitung bzw. eine wiederholte Bearbeitung des gleichen Werkstückbereiches ist bei dieser Maschinengattung nicht möglich, da der durch die Bearbeitung verringerte Werkstückdurchmesser nicht mehr von der Führungsbuchse gestützt werden kann. Zur Anpassung an Werkstoffstangen mit unterschiedlichem Durchmesser lassen sich die Führungsbuchsen auswechseln.

In EP-A 226 836 die den nächstliegenden Stand der Technik beschreibt ist für eine Drehmaschine mit ortsfestem Spindelstock und auf dem Längsschlitten mitfahrender Führungsbuchse bereits vorgeschlagen worden, für eine Zerspanung, die nur in der Nähe des Spindelkastens stattfindet, die Führungsbuchse vom Führungsbuchsenträger zu entfernen. Damit ergäbe sich für kurze Teile eine normale Drehbearbeitung. Da der Führungsbuchsenträger jedoch auf der Maschine verbleibt, weil er gleichzeitig als Werkzeugträger ausgebildet ist, können die Werkzeuge nicht unmittelbar an der Werkstückspannstelle angreifen. Die Bearbeitungsgenauigkeit verringert sich aber, je weiter die Werkzeugschnittstelle vom Werkstückspannbereich entfernt ist.

Der Erfindung liegt die Aufgabe zugrunde, eine Drehmaschine vorzuschlagen, bei der sowohl mit als auch ohne Werkstückabstützung an der Schnittstelle eine genaue Bearbeitung von stangenförmigen Werkstücken möglich ist.

Die Aufgabe wird durch die Merkmale des Anspruchs 1 gelöst.

Bei der Verwendung der Werkstückführungsbuchse ergibt sich eine bei Langdrehmaschinen übliche Bearbeitung, bei der das Werkstück sich in unmittelbarer Nähe des Werkzeugangriffspunktes in der Führungsbuchse abstützt. Für Werkstücke, die ohne zusätzliche Abstützung zerspant werden sollen, taucht die Werkstückspindel mit ihrem dem Bearbeitungsbereich zugewandten Werkstückspindelkopf in eine Werkstückspindelführungsbuchse ein. Die Werkstückspindel wird im Führungsbuchsenträger also nochmals gestützt und zentriert. Dadurch wird auch bei normaler Drehbearbeitung eine hohe Bearbeitungsgenauigkeit erreicht. Diese Bearbeitungsart wird vor allem bei kurzen und steifen Werkstücken eingesetzt.

Die Erfindung ist sowohl bei einer Drehmaschine mit verschieblicher Werkstückspindel und ortsfestem Führungsbuchsenträger als auch bei einer Drehmaschine mit ortsfester Werkstückspindel und in Spindelachsrichtung verschieblichem Führungsbuchsenträger realisierbar.

Die Führungsgenauigkeit wird erhöht, wenn die Führungsbuchsen in einer Führungsspindel gelagert sind.

Es dient ebenfalls der Genauigkeitserhöhung, wenn die in einer Führungsbuchse geführte Werkstückspindel über einen Lagerbund verfügt, durch den sich eine definierte Lagerstelle zwischen Führungsbuchse und Werkstückspindel ergibt.

Die Bearbeitungsgenauigkeit wird weiter erhöht, wenn die Führungsbuchsen mit einer Vorspannkraft am Werkstück oder an der Werkstückspindel anliegen. Dadurch wird das Spiel zwischen den führenden und geführten Elementen verringert. Bei den Führungsbuchsen für Werkstücke werden Durchmesserschwankungen des Ausgangsmaterials ausgeglichen.

Die Gesamtlänge der Vorrichtung wird verkürzt, wenn die Werkstückspindel in den Führungsbuchsenmitnehmer eintaucht.

Bei der Bearbeitung der Werkstücke wird häufig Schneid- und Kühlflüssigkeit verwendet, die in die Führungsbuchsen eindringen kann. Um das weitere Vordringen der Flüssigkeit zu verhindern, ist hinter der Führungsbuchse ein Ringraum geschaffen, der die Flüssigkeit auffängt und durch seine Rotation nach außen fördert, wo sie durch einen Kanal in den Arbeitsraum zurückgeführt werden kann.

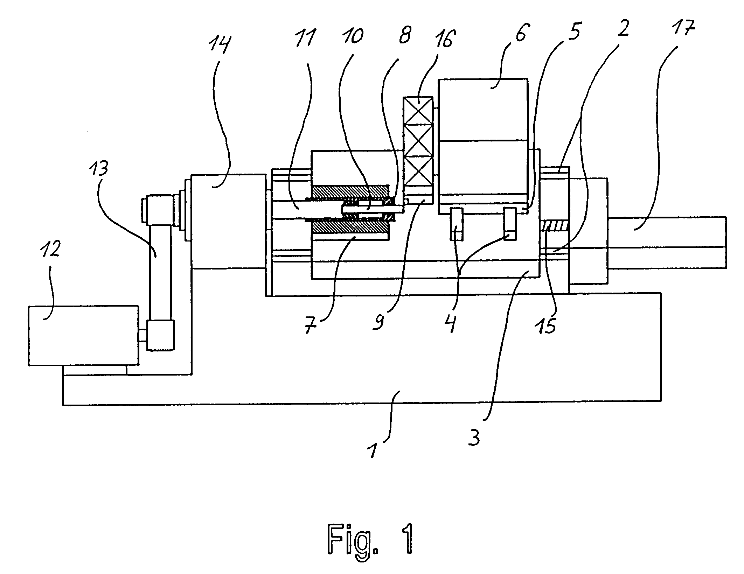

Die Erfindung wird anhand der Zeichnungen näher erläutert. Es zeigen
- Fig. 1: eine Gesamtansicht der Drehmaschine
- Fig. 2: eine Langdrehausführung im Teilschnitt
- Fig. 3: eine Kurzdrehausführung im Teilschnitt
- Fig. 4: die Führungsbuchsenträger einer Langdrehausführung im Schnitt.

Auf einem Drehmaschinenbett 1 sind Führungsbahnen 2 für einen Längsschlitten 3 vorgesehen. Der Längsschlitten 3 besitzt Führungsbahnen 4 für einen Planschlitten 5, der einen als Werkzeugrevolver 16 ausgebildeten Werkzeugträger 6 aufnimmt. Auf dem Längsschlitten 3 ist außerdem ein Führungsbuchsenträger 7 angeordnet, in dem eine Führungsbuchse 8 rotierend gelagert ist. In der Führungsbuchse 8 wird die von den Werkzeugen 9 zu bearbeitende Werkstoffstange 10 geführt, die von der Werkstückspindel 11 rotierend angetrieben wird. Der Antrieb erfolgt durch einen Antriebsmotor 12 über einen Riementrieb 13 auf das hintere Ende der Werkstückspindel 11, die in einem Spindelkasten 14 gelagert ist. Für den Vorschub der Längs- und Planschlitten 3, 5 sind bekannte Vorschubantriebe 17 und Gewindelspindeln 15 vorgesehen.

Die erfindungsgemäße Drehmaschine kann auch einen längsverschieblichen Spindelkasten, eine feststehende Lünette und einen nur in Planrichtung verschieblichen Werkzeugträger aufweisen.

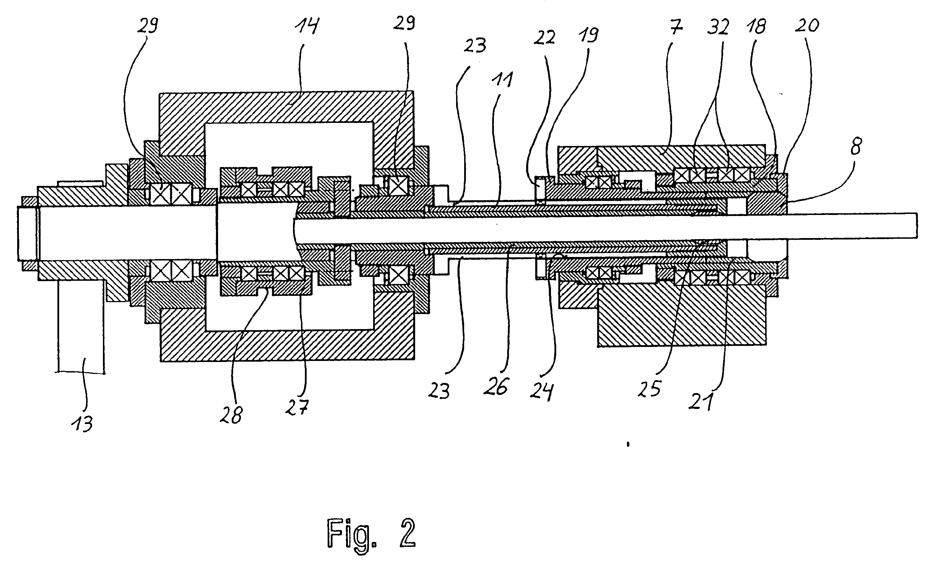

Fig. 2 zeigt die Werkstückspindel 11 und die Werkstückführungseinrichtung der erfindungsgemäßen Drehmaschine in der Langdrehausführung. Im Führungsbuchsenträger 7 ist eine Führungsspindel 18 mittels Wälzlager 32 drehbar gelagert. In der Führungsspindel 18 befindet sich der Führungsbuchsenmitnehmer 19, der die eigentliche Werkstückführungsbuchse 8 zwischen einem Deckel 20, der die Führungsspindel 18 verschließt, und einem Spannkonus 21, der mit einem Innenkegel an der Gegenfläche der Werkstückführungsbuchse 8 anliegt, einspannt. Die Einspannung bewirkt eine radial gerichtete Kraft auf die Werkstückführungsbuchse 8, die eine Vorspannung der Werkstoffstange 10 derart bewirkt, daß sie zwar axial verschoben werden kann, radial jedoch spielfrei gehalten wird.

Der Führungsbuchsenmitnehmer 19 trägt an seinem der Führungsbuchse 8 abgewandten Ende Mitnehmer 22, die in Führungsnuten 23 der Werkstückspindel 11 eingreifen. Dadurch werden der Führungsbuchsenmitnehmer 19 und die Führungsspindel 18 von der Werkstückspindel 11 synchron rotierend angetrieben, können sich relativ zueinander in Spindelachsrichtung jedoch verschieben. Der Führungsbuchsenmitnehmer 19 ist bis dicht hinter die Werkstückführungsbuchse 8 mit einer erweiterten Bohrung 24 versehen, in die die pinolenförmige Werkstückspindel 11 eintauchen kann.

Die Werkstückspindel 11 ist an ihrem rechten Ende mit einer Spannzange 25 ausgerüstet, die die Werkstoffstange 10 hält. Die Spannzange 25 wird durch ein Spannrohr 26 und eine Muffe 27 betätigt, die über eine Mitnehmernut 28 axial verschoben werden kann. In die Mitnehmernut 28 greift z.B. der Bolzen eines hydraulischen Linearantriebes ein. Die Werkstückspindel 11 ist im Spindelkasten 14 mittels Wälzlager 29 drehbar gelagert.

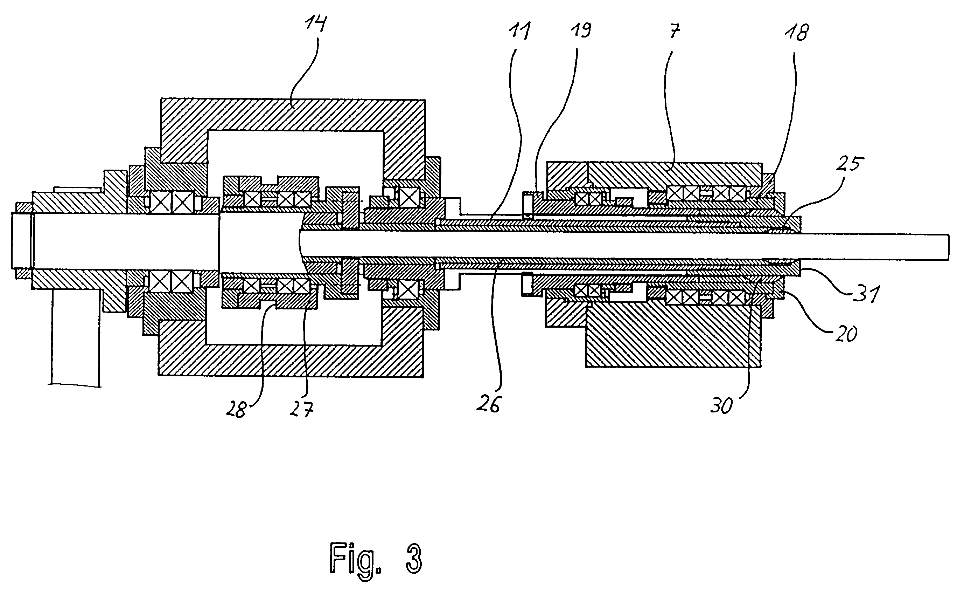

Fig. 3 zeigt den relevanten Teil der Drehmaschine in der Ausführungsform als Kurzdrehautomat. Der Spindelkasten 14, die Werkstückspindel 11, die Spannzange 25 und die Spannzangenbetätigung 26, 27, 28 sind mit der Ausführungsform der Fig. 2 identisch.

Im Führungsbuchsenträger 7 mit der Führungsspindel 18 ist von dem Deckel 20 und dem Führungsbuchsenhalter 19 eine Werkstückspindelführungsbuchse 30 gehalten, die den Kopf 31 der Werkstückspindel 11 aufnimmt.

Das Umrüsten von der Langdrehausführung zur Kurzdrehausführung der erfindungsgemäßen Drehmaschine bedingt also lediglich das Austauschen der Führungsbuchsen 8, 30.

Wegen der doch beträchtlichen Durchmesserunterschiede kann es vorteilhafter sein, die Werkstückführungsbuchse 8 in einer Reduzierhülse aufzunehmen. Die Werkstückspindel 11 kann aus der Werkstückspindelführungsbuchse so weit vorkragen, daß ihre sichere Führung gewährleistet bleibt.

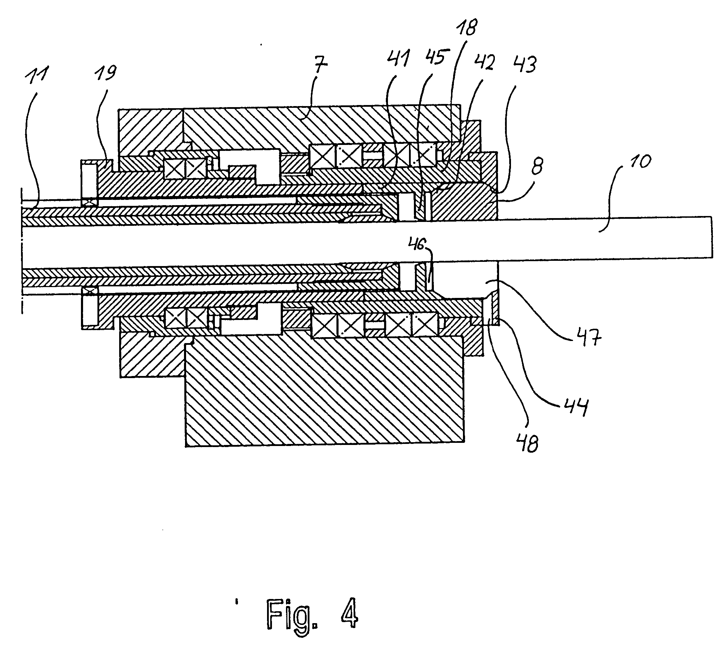

Fig. 4 zeigt eine etwas abgewandelte Ausführungsform des Führungsbuchsenträgers 7 in der Langdrehausführung. Der in der Führungsspindel 18 gelagerte Spannkonus 41, der über seinen Innenkonus 42 und den Innenkonus 43 im Deckel 44 die Führungsbuchse 8 gegen die Werkstoffstange 10 preßt, wenn er durch den Führungsbuchsenmitnehmer 19 axial belastet wird, ist mit einer Stauscheibe 45 derart ausgerüstet, daß sich zwischen der Führungsbuchse 8 und dieser Stauscheibe 45 ein Ringraum 46 bildet. In dem Ringraum 46 kann sich Schneid- oder Kühlflüssigkeit sammeln und durch die Schlitze 47 der Führungsbuchse 8 und einen Kühlmittelkanal 48 im Deckel 44 abgeführt werden. Die Werkstückspindel 11 und die Lagerbereiche der Führungsspindel 18 werden so vor Kühlmittel geschützt.

Die vorgeschlagene Ausführungsform bedingt jedoch, daß beim Umbau von der Langdreh- zur Kurzdrehausführung nicht nur die Führungsbuchse 8, sondern auch der Spannkonus 41 gewechselt werden müssen.

## Patentansprüche

1. Drehmaschine mit einem Spindelkasten (14), in dem eine Werkstückspindel (11) drehbar gelagert ist, die an ihrem einen Ende eine Spannvorrichtung zum Einspannen von stangenförmigen Werkstücken aufweist, mit einem Werkzeugträger (6), der quer zur Werkstückspindelachse verschieblich ist,
mit einer Werkstückführungsbuchse (8), die in einem Führungsbuchsenträger (7) drehbar gelagert ist, so daß die Führungsbuchse (8) koaxial zur Werkstückspindelachse ausgerichtet und auswechselbar im Führungsbuchsenträger (7) befestigt ist und mit Vorschubmitteln zur Relativverschiebung von Werkstückspindel (11) und Führungsbuchse (8) in Werkstückspindelachsrichtung,
dadurch gekennzeichnet,
daß die Werkstückspindel (11) pinolenförmig ausgebildet ist und mindestens um die Länge der Relativverschiebung aus dem Spindelkasten (14) vorkragt und daß die Werkstückführungsbuchse (8) gegen eine Werkstückspindelführungsbuchse (30) zur Aufnahme der pinolenförmigen Werkstückspindel (11) auswechselbar ist.

2. Drehmaschine nach Anspruch 1, dadurch gekennzeichnet, daß der Spindelkasten (14) ortsfest gelagert ist und der Führungsbuchsenträger (7) an einem in Spindelachsrichtung verschieblichen Längsschlitten (3) angeordnet ist, der Führungsbahnen (4) für den querverschieblichen Werkzeugträger (6) besitzt.

3. Drehmaschine nach Anspruch 1, dadurch gekennzeichnet, daß der Spindelkasten (14) in Spindelachsrichtung verschieblich ist und der Führungsbuchsenträger (7) ortsfest an der Drehmaschine gelagert ist.

4. Drehmaschine nach Anspruch 1, dadurch gekennzeichnet, daß sowohl die Werkstückführungsbuchsen (8) als auch die Werkstückspindelführungsbuchse (30) mit einer Führungsspindel (18) drehbar im Führungsbuchsenträger (7) gelagert sind.

5. Drehmaschine nach Anspruch 1, dadurch gekennzeichnet, daß die pinolenförmige Werkstückspindel (11) an ihrem vorkragenden Ende einen Führungsbund aufweist.

6. Drehmaschine nach Anspruch 1, dadurch gekennzeichnet, daß die Führungsbuchsen (8, 30) zwischen einem Spannkonus (21, 41) und einem Abschlußdeckel (20, 44) durch einen Führungsbuchsenmitnehmer (19) eingespannt sind.

7. Drehmaschine nach Anspruch 1, dadurch gekennzeichnet, daß die pinolenförmige Werkstückspindel (11) zumindestens teilweise in den Führungsbuchsenmitnehmer (19) einführbar ist.

8. Drehmaschine nach Anspruch 4, dadurch gekennzeichnet, daß die Führungsspindel (18) durch Wälzlager (32) im Führungsbuchsenträger (7) gehalten ist.

9. Drehmaschine nach Anspruch 6, dadurch gekennzeichnet, daß die Werkstückführungsbuchse (8) mit Vorspannung an das Werkstück (10) gepreßt wird.

10. Drehmaschine nach Anspruch 1, dadurch gekennzeichnet, daß zwischen Werkstückspindel (11) und Werkstückführungsbuchse (8) eine Ringnut (46) vorgesehen ist, die über einen Kühlmittelkanal (48) mit dem Arbeitsraum verbunden ist.

## Claims

1. A lathe having a headstock (14) in which a work spindle (11) is rotatably mounted which has a clamping device at its one end for clamping hold of rod-shaped workpieces, having a tool carrier (6) which is transversely displaceable relative to the work spindle axle,
having a tool guide sleeve (8) which is rotatably mounted in a guide sleeve carrier (7) so that the guide sleeve(8) is oriented coaxially to the work spindle axle and is replaceably fixed in the guide sleeve carrier (7), and having feed means for displacing the work spindle (11) and the guide sleeve (8) relative to each other in the direction of the work spindle axle,
characterised in that,
the work spindle (11) is formed like a tailstock barrel and projects from the headstock (14) at least by the length of the relative displacement, and that the guide sleeve (8) can be changed for a work spindle guide sleeve (30) to receive the work spindle (11) which is like a tailstock barrel.

2. A lathe according to Claim 1, characterised in that the headstock (14) is stationarily mounted and the guide sleeve carrier (7) is arranged on a longitudinal slide (3) which is displaceable in the direction of the spindle axle, the longitudinal slide having guide tracks (4) for the transversely displaceable tool carrier (6).

3. A lathe according to Claim 1, characterised in that the headstock (14) is displaceable in the direction of the spindle axle and the guide sleeve carrier (7) is mounted at a fixed position on the lathe.

4. A lathe according to Claim 1, characterised in that both guide sleeves (8) and the work spindle guide sleeve (30) are mounted with a guide spindle (18) rotatably in the guide sleeve carrier (7).

5. A lathe according to Claim 1, characterised in that the work spindle (11) which is like a tailstock barrel has a guide collar at its projecting end.

6. A lathe according to Claim 1, characterised in that the guide sleeves (8, 30) are clamped between a clamping cone (21,41) and an end plate (20, 44) by a guide sleeve carrier (19).

7. A lathe according to Claim 1, characterised in that the work spindle (11) which is like a tailstock barrel can be introduced at least partially into the guide sleeve carrier (19).

8. A lathe according to Claim 4, characterised in that the guide spindle (18) is held in the guide sleeve carrier (7) by roller bearings(32).

9. A lathe according to claim 6, characterised in that the guide sleeve (8) is pressed with pre-stressing against the tool (10).

10. A lathe according to Claim 1, characterised in that provided between the work spindle (11) and the guide sleeve (8) is an annular groove (46) which communicates with the operating chamber by way of coolant channel (48).

## Revendications

1. Tour comportant une poupée (14), dans laquelle une broche porte-pièce (11) est montée tournante, et présentant, à l'une de ses extrémités, un dispositif de serrage de pièces à usiner en forme de barres, comportant un porte-outil (6) déplaçable en translation de façon transversale à l'axe de la broche porte-pièce, comportant un canon de décolletage (8) de pièces monté tournant dans un support (7) de canon de décolletage, de telle sorte que le canon de décolletage (8) soit orienté coaxialement à l'axe de la broche porte-pièce et soit fixé de façon interchangeable dans le support (7) de canon de décolletage, et comportant des moyens d'avancement destinés au déplacement relatif de la broche porte-pièce (11) et du canon de décolletage (8) dans le sens de l'axe de la broche porte-pièce, caractérisé en ce que la broche porte-pièce (11) est conformée en douille de contre-poupée et dépasse en porte-à-faux de la poupée d'au moins la longueur du déplacement relatif et en ce que le canon de décolletage (8) de pièces est susceptible d'être échangé contre une douille de guidage (30) de la broche porte-pièce afin de loger la broche porte-pièce (11) en forme de douille de contre-poupée.

2. Tour selon la revendication 1, caractérisé en ce que la poupée (14) est immobile et le support (7) de canon de décolletage est monté sur un chariot (3) se déplaçant longitudinalement dans le sens de l'axe de la broche, qui possède des rails de guidage (4) pour le porte-outil (6) se déplaçant dans le sens transversal.

3. Tour selon la revendication 1, caractérisé en ce que la poupée (14) est déplaçable dans le sens de l'axe de la broche et le support du canon de décolletage (7) est monté fixe sur le tour.

4. Tour selon la revendication 1, caractérisé en ce qu'aussi bien le canon de décolletage (8) de pièces que la douille de guidage (30) de la broche porte-pièce sont montés tournants, avec une broche de guidage (18) dans le support (7) du canon de décolletage.

5. Tour selon la revendication 1, caractérisé en ce que la broche porte-pièce (11) en forme de douille de contre-poupée présente, à son extrémité en porte-à-faux, un collet de guidage.

6. Tour selon la revendication 1, caractérisé en ce que les douilles de guidage (8, 30) sont serrées entre un cône de serrage (21, 41) et un couvercle (20, 44), par un entraîneur (19) de douille de guidage.

7. Tour selon la revendication 1, caractérisé en ce que la broche porte-pièce (11) en forme de douille de contre-poupée peut être introduite, au moins partiellement, dans l'entraîneur de douille de guidage (19).

8. Tour selon la revendication 4, caractérisé en ce que la broche de guidage (18) est maintenue dans le support du canon de décolletage (7) par des paliers à roulement (32).

9. Tour selon la revendication 6, caractérisé en ce que le canon de décolletage (8) de pièces est monté avec une précontrainte sur la pièce à usiner (10).

10. Tour selon la revendication 1, caractérisé en ce qu'il est prévu, entre la broche porte-pièce (11) et le canon de décolletage (8) de pièces, une gorge (46) annulaire qui communique avec l'espace de travail par l'intermédiaire d'un canal (48) pour le produit de refroidissement.
